# EUROPEAN PATENT APPLICATION

(11) **EP 4 767 884 A1**
(43) Date of publication of application: **01.07.2026**
(21) Application number: 25227306.5
(22) Date of filing: 26.12.2025
(51) Int. Cl.: A47J 37/06

(54) **COOKING APPLIANCE**

(30) Priority: 31.12.2024 CN 202423314992 U
(71) Applicant: Shenzhen Typhur Technology Co., Ltd, Shenzhen, Guangdong 518067 (CN)
(72) Inventor: LI, Shilei, Nanshan District, Shenzhen City, Guangdong, 518067 (CN); CHEN, Zuxiang, Futian District, Shenzhen, Guangdong (CN)
(74) Representative: KIPA AB

(57) **Abstract**

The present application discloses a cooking appliance, the cooking appliance comprising a pot body, a first heating tube, a second heating tube, and a fan. The pot body comprises a cooking cavity, the first heating tube is defined at the top of the pot body. The second heating tube is defined at the bottom of the pot body, both the first heating tube and the second heating tube are configured to generate heat when energized to heat air and the pot body, and the fan is configured to drive hot air flow to circulate in the cooking cavity. The second heating tube forms at least two rings of annular structure.

## Description

### Technical Field

The present application relates to the technical field of kitchen appliances, and in particular to a cooking appliance.

### Background Art

Cooking appliances typically comprise a heating tube, which is configured to generate heat when energized to heat foods. For example, an air fryer is provided with a heating tube. During operation, the air fryer heats air and a pot body through the heating tube, and blows high-temperature air into the pot through a fan to heat food, so that hot air circulates in a closed space, and the food is fried using its own grease, thereby dehydrating the food and making its surface golden and crispy to achieve a frying effect. Among them, the heating tube located at the bottom of the pot body is usually configured as a circular or polygonal single-ring structure.

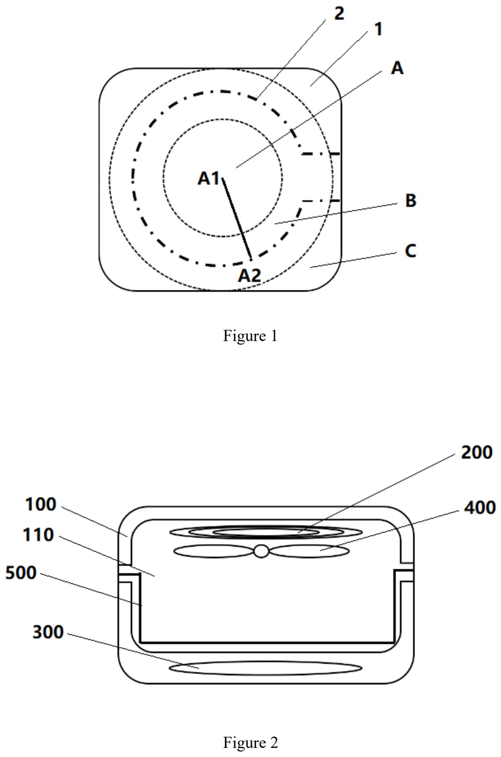

However, when a single-ring structure heating tube is applied to an air fryer with a larger pot bottom area, it is prone to uneven pot bottom temperature, which is insufficient to quickly dehydrate the lower surface of the food. For example, please refer to FIG. 1, in FIG. 1, area B on the pot bottom 1 close to the heating tube 2 will have a higher temperature than areas A and C away from the heating tube 2. Moreover, the length of the single-ring structure heating tube 2 is limited, and in the power design of the heating tube, the longer the line length, the higher the allowable maximum power, so that under the same wire diameter and plane outer diameter, the maximum power of the single-ring structure heating tube 2 is limited.

### Summary of the Invention

The main purpose of the present application is to provide a cooking appliance with a more uniform pot bottom temperature and a higher heating tube power.

In a first aspect, one embodiment provides a cooking appliance, comprising:
a pot body, the pot body comprising a cooking cavity;
a first heating tube, the first heating tube defined at the top of the pot body;
a second heating tube, the second heating tube defined at the bottom of the pot body, both the first heating tube and the second heating tube configured to generate heat when energized to heat air and the pot body;
and a fan, the fan configured to drive hot air flow to circulate in the cooking cavity;
the second heating tube forms at least two rings of annular structure.

In one embodiment, the at least two rings of annular structure are sequentially defined along a direction from the center of the second heating tube to the periphery.

In one embodiment, the second heating tube comprises a single tube body, a portion of the single tube body forms the annular structure located at the periphery, and another portion of the single tube body bends inward to form the annular structure located internally.

In one embodiment, the second heating tube has a first end portion and a second end portion, the single tube body extends from the first end portion to the second end portion; the second heating tube has a first side and a second side defined oppositely, both the first end portion and the second end portion are located at the first side; the annular structure comprises a first annular structure and a second annular structure, the first annular structure is located at the outermost periphery of the tube body, and the first annular structure bends inward from the middle of the second side to form the second annular structure.

In one embodiment, the annular structure further comprises a third annular structure, and the second annular structure bends inward from the middle toward a side of the first end portion and the second end portion to form the third annular structure.

In one embodiment, the second heating tube comprises at least two tube bodies, each tube body forms at least one annular structure, and the annular structures formed by the at least two tube bodies are sequentially nested along a direction from the center of the second heating tube to the periphery.

In one embodiment, the radial dimension of the annular structure located at the outermost periphery in the second heating tube is not smaller than the radial dimension of the first heating tube.

In one embodiment, the annular structure is configured as two rings, the two rings of annular structure are respectively a first annular structure and a second annular structure, and the second annular structure is located inside the first annular structure, further comprising a food carrier, the food carrier configured to carry foods in the cooking cavity, and the ratio of the radial dimension of the first annular structure to the radial dimension of the bottom of the food carrier is not smaller than 1:2.

In one embodiment, the annular structure is configured as two rings, the two rings of annular structure are respectively a first annular structure and a second annular structure, and the second annular structure is located inside the first annular structure; further comprising a food carrier, the food carrier configured to carry foods in the cooking cavity, and the ratio of the radial dimension of the second annular structure to the radial dimension of the bottom of the food carrier is not smaller than 3:7.

In a second aspect, one embodiment provides a cooking appliance, comprising:
a pot body, the pot body comprising a cooking cavity;
a second heating tube, the second heating tube defined at the bottom of the pot body, the second heating tube configured to generate heat when energized to heat air and the pot body;
and a fan, the fan configured to drive hot air flow to circulate in the cooking cavity;
the second heating tube forms at least two rings of annular structure.

According to the cooking appliance of the above embodiments, the cooking appliance comprises a pot body, a first heating tube, a second heating tube, and a fan. The pot body has a cooking cavity, the first heating tube is defined at the top of the pot body. The second heating tube is defined at the bottom of the pot body, both the first heating tube and the second heating tube are configured to generate heat when energized to heat air and the pot body, and the fan is configured to drive hot air flow to circulate in the cooking cavity. The second heating tube forms at least two rings of annular structure. On one hand, since the second heating tube forms at least two rings of annular structure, when the second heating tube forms an orthographic projection at the bottom of the pot body, the maximum gap in the orthographic projection is shorter in distance compared to the scheme using a traditional single-ring heating tube, so that the heat generated by the second heating tube can be more uniformly transferred to the bottom of the pot body, thereby making the temperature of different areas at the bottom of the pot body more uniform. On the other hand, compared with a single-ring heating tube, forming at least two rings of annular structure makes the line length of the second heating tube longer under the same wire diameter and plane outer diameter, thereby facilitating increasing the power of the second heating tube. In addition, by generating heat from the top and bottom of the pot body respectively through the first heating tube and the second heating tube, it is beneficial to improve the heating efficiency of the cooking appliance and to reduce the temperature difference between the top and bottom of the pot body.

### Brief Description of the Drawings

FIG. 1 is a schematic structural diagram of a pot bottom and a heating tube in the prior art;
FIG. 2 is a schematic structural diagram of a cooking appliance in one embodiment of the present application;
FIG. 3 is a schematic structural diagram of a cooking appliance in one embodiment of the present application;
FIG. 4 is a cross-sectional view of a cooking appliance in one embodiment of the present application;
FIG. 5 is a schematic structural diagram of a pot body and a second heating tube in one embodiment of the present application;
FIG. 6 is a schematic structural diagram of a second heating tube in one embodiment of the present application;
FIG. 7 is a schematic structural diagram of a second heating tube in a second embodiment of the present application;
FIG. 8 is a schematic structural diagram of a second heating tube in a third embodiment of the present application;
FIG. 9 is a schematic structural diagram of a second heating tube in a fourth embodiment of the present application;
FIG. 10 is a schematic structural diagram of a second heating tube in a fifth embodiment of the present application;
FIG. 11 is a schematic structural diagram of a second heating tube in a sixth embodiment of the present application;
FIG. 12 is a schematic structural diagram of a pot body, a first heating tube, and a second heating tube in one embodiment of the present application;

Reference numerals: 1, a pot bottom; 2, a heating tube; 100, a pot body; 110, a cooking cavity; 200, a first heating tube; 300, a second heating tube; 310, an annular structure; 311, a first annular structure; 312, a second annular structure; 313, a third annular structure; 320, a tube body; 330, a first end portion; 340, a second end portion; 350, a first side; 360, a second side; 400, a fan; 500, a food carrier.

### Detailed Description

The present application will be further described in detail below through specific embodiments in combination with the accompanying drawings. Similar elements in different embodiments are assigned associated similar element numbers. In the following embodiments, many detailed descriptions are provided to enable the present application to be better understood. However, those skilled in the art can readily recognize that some features may be omitted in different situations, or may be replaced by other elements, materials, or methods. In some cases, some operations related to the present application are not shown or described in the specification, which is to avoid overwhelming the core part of the present application with excessive descriptions, and for those skilled in the art, detailed description of these related operations is not necessary, as they can fully understand the related operations based on the description in the specification and the general technical knowledge in the art.

In addition, the features, operations, or characteristics described in the specification may be combined in any appropriate manner to form various embodiments. At the same time, the steps or actions in the method description may also be exchanged or adjusted in sequence in a manner apparent to those skilled in the art. Therefore, the various sequences in the specification and drawings are only for clearly describing a certain embodiment and do not imply a necessary sequence unless otherwise specified that a certain sequence must be followed.

The numbering of components herein, such as "first", "second", etc., is only configured to distinguish the described objects and does not have any sequential or technical meaning. The terms "connection" and "coupling" in the present application, unless otherwise specified, include both direct and indirect connections (couplings).

The present embodiment provides a cooking appliance.

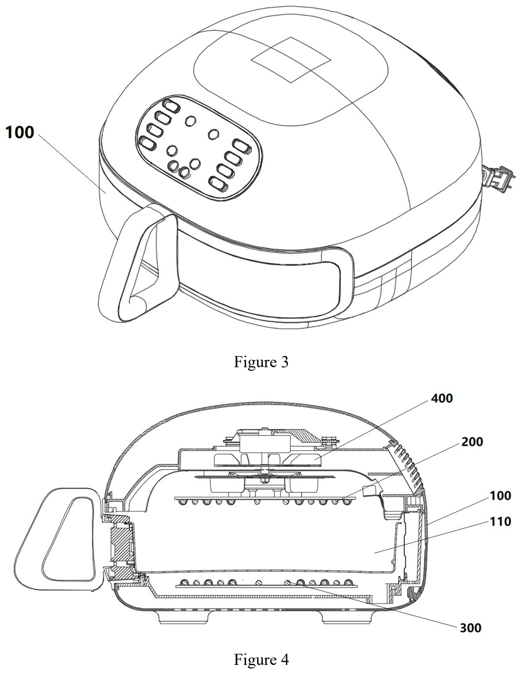

Please refer to FIGS. 2-11, the cooking appliance comprises a pot body 100, a first heating tube 200, a second heating tube 300, a fan 400, and a food carrier 500.

Please refer to FIGS. 2-5, the pot body 100 has a cooking cavity 110, and the first heating tube 200 is defined at the top of the pot body 100. The second heating tube 300 is defined at the bottom of the pot body 100, both the first heating tube 200 and the second heating tube 300 are configured to generate heat when energized to heat air and the pot body 100, and the fan 400 is configured to drive hot air flow to circulate in the cooking cavity 110. The second heating tube 300 forms at least two rings of annular structure 310. The food carrier 500 is defined in the pot body 100, and the first heating tube 200 and the second heating tube 300 are respectively defined on both sides of the food carrier 500 to heat foods from different directions.

In combination with FIG. 1, on one hand, since the second heating tube 300 forms at least two rings of annular structure 310, when the second heating tube 300 forms an orthographic projection at the bottom of the food carrier 500, the maximum gap in the orthographic projection is shorter in distance compared to the scheme using a traditional single-ring heating tube 2, so that the heat generated by the second heating tube 300 can be more uniformly transferred to the bottom of the food carrier 500, thereby making the temperature of different areas at the bottom of the food carrier 500 more uniform. On the other hand, compared with the single-ring heating tube 2, forming at least two rings of annular structure 310 makes the line length of the second heating tube 300 longer under the same wire diameter and plane outer diameter, thereby facilitating increasing the power of the second heating tube 300.

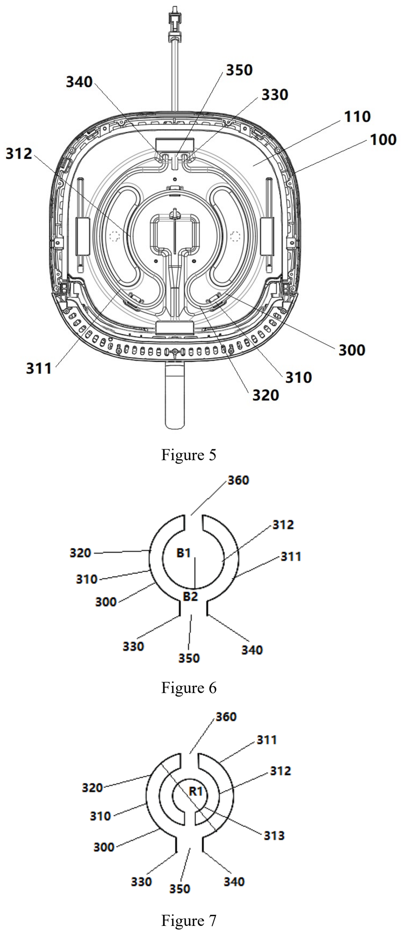

Specifically, please refer to FIG. 1, in the scheme of the traditional single-ring heating tube 2, "the point at the bottom of the food carrier 500 farthest from the orthographic projection" is point A1 in FIG. 1, and "the distance between the point at the bottom of the food carrier 500 farthest from the orthographic projection and the projection" is line segment A1-A2 in FIG. 1. Please refer to FIGS. 5 and 6, in the present embodiment, "the point at the bottom of the food carrier 500 farthest from the orthographic projection" can be regarded as point B1 in FIG. 6, and "the distance between the point at the bottom of the food carrier 500 farthest from the orthographic projection and the projection" can be regarded as line segment B1-B2 in FIG. 6. It can be understood that, please refer to FIGS. 1, 5, and 6, when the plane outer diameters of the heating tube 2 and the second heating tube 300 are the same, the length of line segment B1-B2 is smaller than the length of line segment A1-A2. That is, in the present embodiment, the difference in distances between different areas at the bottom of the food carrier 500 and the second heating tube 300 is smaller, so that the heat generated by the second heating tube 300 can be more uniformly transferred to the bottom of the food carrier 500, thereby making the temperature of different areas at the bottom of the food carrier 500 more uniform. In addition, by generating heat from the top and bottom of the pot body 100 respectively through the first heating tube 200 and the second heating tube 300, it is beneficial to improve the heating efficiency of the cooking appliance, to reduce the temperature difference between the top of the pot body 100 and the bottom of the pot body 100, and also to quickly heat both the front and back sides of the food carried on the food carrier 500, removing moisture, thereby achieving quick browning and crispiness of the food.

It should be noted that the plane outer diameter of the above second heating tube 300 can be understood as the diameter of the outermost annular structure 310 of the second heating tube 300. The line length of the above second heating tube 300 can be understood as the sum of the circumferences of all its annular structures 310 and the line lengths of the transition portions between all annular structures 310. Specifically, the plane outer diameter of the second heating tube 300 in FIG. 7 can be regarded as line segment R1 in FIG. 7, and the line length of the second heating tube 300 in FIG. 7 can be regarded as the sum of the circumferences of the first annular structure 311, the second annular structure 312, and the third annular structure 313 and the line lengths of the transition portions between them. The wire diameter of the above second heating tube 300 can be understood as the diameter of the cross-section of the second heating tube 300. The more uniform temperature of different areas at the bottom of the pot body 100 or the food carrier 500 can be understood as a smaller temperature difference value in different areas at the bottom of the pot body 100 or the food carrier 500.

Please refer to FIGS. 5-11, in one embodiment, the at least two rings of annular structure 310 are sequentially defined along a direction from the center of the second heating tube 300 to the periphery of the second heating tube 300.

This makes the annular structure 310 located at the periphery in the second heating tube 300 surround the annular structure 310 located internally, that is, the tube body 320 of the second heating tube 300 is more uniformly distributed in the internal and peripheral spaces, so that the heat generated by the second heating tube 300 can be more uniformly transferred to the bottom of the pot body 100, thereby making the temperature of different areas at the bottom of the pot body 100 more uniform.

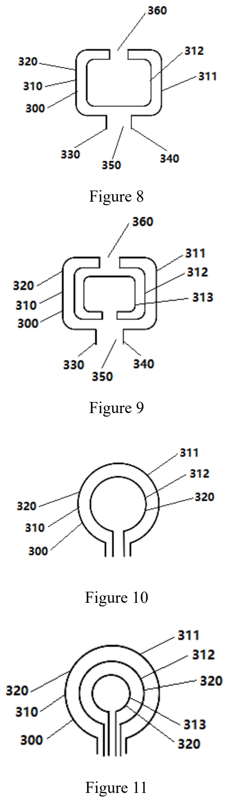

Specifically, please refer to FIGS. 5, 6, 8, and 10, in the present embodiment, the second heating tube 300 forms two rings of annular structure 310. Please refer to FIGS. 7, 9, and 11, in other embodiments, the second heating tube 300 may also form three or more rings of annular structure 310. The annular structure 310 is configured as a circular ring structure or a polygonal structure, for example, please refer to FIGS. 8 and 9, the polygonal structure may be a quadrilateral, and the polygonal structure may also be a pentagon, hexagon, or other suitable shapes.

Please refer to FIGS. 5-9, in one embodiment, the second heating tube 300 comprises a single tube body 320, a portion of the single tube body 320 forms the annular structure 310 located at the periphery, and another portion of the single tube body 320 bends inward to form the annular structure 310 located internally.

By bending the single tube body 320 to form at least two rings of annular structure 310, on one hand, the power circuit of the single tube body 320 is simpler, thereby facilitating reducing the difficulty of wiring operations and the failure rate of the power circuit. On the other hand, the processing cost, quality control, and disposition cost of the single tube body 320 are lower. Of course, in other embodiments, the second heating tube 300 may also comprise two or more tube bodies 320.

Please refer to FIGS. 5-9, in one embodiment, the second heating tube 300 has a first end portion 330 and a second end portion 340, and the single tube body 320 extends from the first end portion 330 to the second end portion 340. The second heating tube 300 has a first side 350 and a second side 360 defined oppositely, both the first end portion 330 and the second end portion 340 are located at the first side 350. The annular structure 310 comprises a first annular structure 311 and a second annular structure 312, the first annular structure 311 is located at the outermost periphery of the tube body 320, and the first annular structure 311 bends inward from the middle of the second side 360 to form the second annular structure 312.

On one hand, both the first end portion 330 and the second end portion 340 are located at the first side 350, thereby facilitating disposing the first side 350 of the second heating tube 300 in the pot body 100, and also facilitating circuit wiring at the first side 350 of the second heating tube 300. On the other hand, the first annular structure 311 bends inward from the middle of the second side 360 to form the second annular structure 312, making the first annular structure 311 and the second annular structure 312 an integral structure, thereby facilitating reducing the processing cost, quality control, and disposition cost of the second heating tube 300.

Please refer to FIGS. 7 and 9, in one embodiment, the annular structure 310 further comprises a third annular structure 313, and the second annular structure 312 bends inward from the middle toward a side of the first end portion 330 and the second end portion 340 to form the third annular structure 313.

On one hand, this makes the first annular structure 311, the second annular structure 312, and the third annular structure 313 sequentially nested along a direction from the periphery to the center. On the other hand, this makes the first annular structure 311, the second annular structure 312, and the third annular structure 313 form an integral structure, thereby facilitating reducing the processing cost, quality control, and disposition cost of the second heating tube 300. Of course, in other embodiments, the second heating tube 300 may further comprise a greater number of annular structures 310, for example, the second tube body 320 may further comprise a fourth annular structure.

Please refer to FIGS. 10 and 11, in one embodiment, the second heating tube 300 comprises at least two tube bodies 320, each tube body 320 forms at least one annular structure 310, and the annular structures 310 formed by the at least two tube bodies 320 are sequentially nested along a direction from the center of the second heating tube 300 to the periphery.

This achieves composing the second heating tube 300 by multiple tube bodies 320, for example, please refer to FIG. 10, the second heating tube 300 may comprise two tube bodies 320, each tube body 320 forms one annular structure 310, and then the two annular structures 310 are sequentially nested along a direction from the periphery to the center. Similarly, please refer to FIG. 11, the second heating tube 300 may further comprise three tube bodies 320, forming three annular structures 310 in one-to-one correspondence through the three tube bodies 320, and sequentially nesting the three annular structures 310 along a direction from the periphery to the center. Of course, in the at least two tube bodies 320 comprised in the second heating tube 300, the annular structure 310 formed by a single tube body 320 is not limited to one, for example, two annular structures 310 may be formed by a single tube body 320, and then nested and combined with the annular structure 310 formed by another tube body 320.

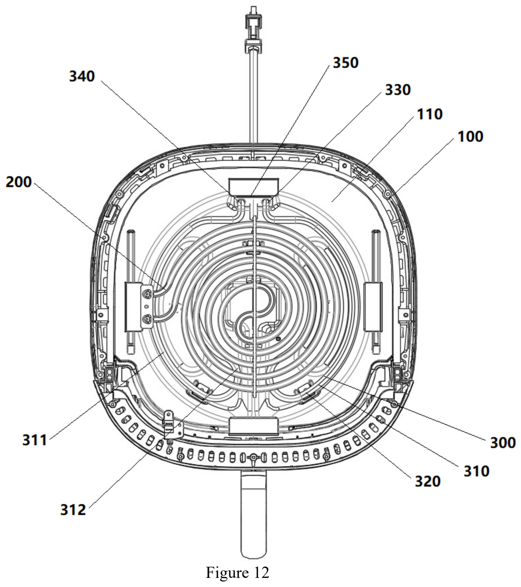

Please refer to FIGS. 1-5 and 12, in one embodiment, the radial dimension of the annular structure 310 located at the outermost periphery in the second heating tube 300 is not smaller than the radial dimension of the first heating tube 200.

This makes the radial dimension of the largest annular structure 310 in the second heating tube 300 not smaller than the radial dimension of the first heating tube 200, which adapts to the allocation of installation space at the top and bottom of the pot body 100, and also adapts to the distances between the first heating tube 200 and the second heating tube 300 and the food in the pot body 100. That is, by reasonably designing the radial dimensions of the first heating tube 200 and the second heating tube 300, it is beneficial to achieve efficient utilization of the installation space in the cooking appliance and to improve the cooking effect of the cooking appliance on food.

It should be noted that the "radial dimension" of the annular structure 310 can be understood as the length of the line connecting the two farthest points in the figure formed by the annular structure 310 in the plane. For example, when the annular structure 310 is a circular ring structure, its radial dimension is the diameter of the circular ring. When the circular ring structure is polygonal, its radial dimension is the length of the longest diagonal in the polygon.

Please refer to FIGS. 5, 6, 8, and 10, in one embodiment, the annular structure 310 is configured as two rings, the two rings of annular structure 310 are respectively a first annular structure 311 and a second annular structure 312, and the second annular structure 312 is located inside the first annular structure 311.

This makes the first annular structure 311 and the second annular structure 312 sequentially nested along a direction from the periphery to the center, specifically, the first annular structure 311 and the second annular structure 312 may be an integral structure, or may be respectively formed by two tube bodies 320. Of course, please refer to FIGS. 7, 9, and 11, in other embodiments, the annular structure 310 may also be configured as three rings or other suitable number of rings.

Please refer to FIGS. 1-5, in one embodiment, the cooking appliance further comprises a food carrier 500, the food carrier 500 is configured to carry foods in the cooking cavity 110, the ratio of the radial dimension of the first annular structure 311 to the radial dimension of the bottom of the food carrier 500 is not smaller than 1:2. The ratio of the radial dimension of the second annular structure 312 to the radial dimension of the bottom of the food carrier 500 is not smaller than 3:7. Preferably, the ratio of the radial dimension of the first annular structure 311 to the radial dimension of the bottom of the food carrier 500 is not smaller than 3:4. The ratio of the radial dimension of the second annular structure 312 to the radial dimension of the bottom of the food carrier 500 is not smaller than 3:7.

On one hand, when using the cooking appliance, the user can carry and take out the foods in the cooking appliance through the food carrier 500, thereby facilitating the user's use. On the other hand, by reasonably designing the radial dimensions of the first annular structure 311 and the second annular structure 312 and the radial dimension of the bottom of the food carrier 500, the heat dissipated by the second heating tube 300 can be more efficiently and uniformly transferred to different areas at the bottom of the food carrier 500, thereby facilitating improving the cooking effect of the cooking appliance on the foods in the food carrier 500. Specifically, the food carrier may be a frying basket, a grill rack, or other structures capable of carrying foods. Of course, in other embodiments, the cooking appliance may not comprise a food carrier 500, but place the foods directly into the pot body 100.

It can be understood that the cooking appliance may also not comprise the first heating tube 200.

For example, please refer to FIGS. 2-11, the present embodiment also provides a cooking appliance, the cooking appliance comprises a pot body 100, a second heating tube 300, and a fan 400.

The pot body 100 has a cooking cavity 110, the first heating tube 200 is defined at the top of the pot body 100. The second heating tube 300 is defined at the bottom of the pot body 100, the second heating tube 300 is configured to generate heat when energized to heat air and the pot body 100, and the fan 400 is configured to drive hot air flow to circulate in the cooking cavity 110. The second heating tube 300 forms at least two rings of annular structure 310.

In combination with FIG. 1, on one hand, since the second heating tube 300 forms at least two rings of annular structure 310, when the second heating tube 300 forms an orthographic projection at the bottom of the pot body 100, the distance between the point at the bottom of the pot body 100 farthest from the orthographic projection and the projection is shorter compared to the scheme using a traditional single-ring heating tube 2, so that the heat generated by the second heating tube 300 can be more uniformly transferred to the bottom of the pot body 100, thereby making the temperature of different areas at the bottom of the pot body 100 more uniform. On the other hand, compared with the single-ring heating tube 2, forming at least two rings of annular structure 310 makes the line length of the second heating tube 300 longer under the same wire diameter and plane outer diameter, thereby facilitating increasing the power of the second heating tube 300.

The above uses specific examples to illustrate the present application, which is only configured to help understand the present application and is not intended to limit the present application. For those skilled in the technical field to which the present application belongs, several simple deductions, modifications, or substitutions can also be made according to the idea of the present application.

## Claims

1. A cooking appliance, comprising:
a pot body, the pot body comprising a cooking cavity;
a first heating tube, the first heating tube defined at the top of the pot body;
a second heating tube, the second heating tube defined at the bottom of the pot body, both the first heating tube and the second heating tube configured to generate heat when energized to heat air and the pot body;
a fan, the fan configured to drive hot air flow to circulate in the cooking cavity; and
**characterized in that** the second heating tube forms at least two rings of annular structure.

2. The cooking appliance according to claim 1, **characterized in that** the at least two rings of annular structure are sequentially defined along a direction from a center of the second heating tube to periphery of the second heating tube.

3. The cooking appliance according to claim 2, **characterized in that** the second heating tube comprises a single tube body, a portion of the single tube body forms the annular structure located at the periphery, and another portion of the single tube body bends inward to form the annular structure located internally.

4. The cooking appliance according to claim 3, **characterized in that** the second heating tube has a first end portion and a second end portion, the single tube body extends from the first end portion to the second end portion; the second heating tube has a first side and a second side defined oppositely, both the first end portion and the second end portion are located at the first side; the annular structure comprises a first annular structure and a second annular structure, the first annular structure is located at the outermost periphery of the tube body, and the first annular structure bends inward from the middle of the second side to form the second annular structure.

5. The cooking appliance according to claim 4, **characterized in that** the annular structure further comprises a third annular structure, and the second annular structure bends inward from the middle toward a side of the first end portion and the second end portion to form the third annular structure.

6. The cooking appliance according to claim 2, **characterized in that** the second heating tube comprises at least two tube bodies, each tube body forms at least one annular structure, and annular structures formed by the at least two tube bodies are sequentially nested along a direction from the center of the second heating tube to the periphery of the second heating tube.

7. The cooking appliance according to claim 2, **characterized in that** a radial dimension of the annular structure located at the outermost periphery in the second heating tube is not smaller than a radial dimension of the first heating tube.

8. The cooking appliance according to claim 2, **characterized in that** the annular structure is configured as two rings, the two rings of annular structure are respectively a first annular structure and a second annular structure, and the second annular structure is located inside the first annular structure, further comprising a food carrier, the food carrier configured to carry food in the cooking cavity, and a ratio of a radial dimension of the first annular structure to a radial dimension of the bottom of the food carrier is not smaller than 1:2.

9. The cooking appliance according to claim 2, **characterized in that** the annular structure is configured as two rings, the two rings of annular structure are respectively a first annular structure and a second annular structure, and the second annular structure is located inside the first annular structure; further comprising a food carrier, the food carrier configured to carry foods in the cooking cavity, and the ratio of the radial dimension of the second annular structure to the radial dimension of the bottom of the food carrier is not smaller than 3:7.

10. A cooking appliance, comprising:
a pot body, the pot body comprising a cooking cavity;
a second heating tube, the second heating tube defined at the bottom of the pot body, the second heating tube configured to generate heat when energized to heat air and the pot body;
a fan, the fan configured to drive hot air flow to circulate in the cooking cavity; and
**characterized in that** the second heating tube forms at least two rings of annular structure.
